# EUROPEAN PATENT SPECIFICATION

(11) **EP 2 909 012 B1**
(45) Date of publication and mention of the grant of the patent: **28.02.2018**
(21) Application number: 13745756.0
(22) Date of filing: 24.07.2013
(51) Int. Cl.: B29C 70/44

(54) **COMPLIANT LAYER FOR MATCHED TOOL MOLDING OF UNEVEN COMPOSITE PREFORMS**
NACHGIEBIGE SCHICHT FÜR ANGEPASSTE WERKZEUGFORMUNG VON UNEBENEN VERBUNDSTOFFVORFORMEN
COUCHE SOUPLE POUR UN OUTIL DE MOULAGE DE PRÉFORMES IRRÉGULIERES À BASE DE COMPOSITE

(30) Priority: 24.09.2012 US 201213625598
(43) Date of publication of application: 26.08.2015
(73) Proprietor: The Boeing Company, Chicago, IL 60606-1596 (US)
(72) Inventor: MATSEN, Marc, R., Chicago, IL 60606 (US); CARTER, Erika, L., Chicago, IL 60606 (US); GEORGE, Pete, E., Chicago, IL 60606 (US)
(74) Representative: Howson, Richard G.B.
(86) International application number: PCT/US2013/051873
(87) International publication number: WO 2014/046781

(56) References cited:
- US-A- 5 009 687
- US-A- 5 380 480
- US-A- 5 645 670

## Description

### BACKGROUND

This disclosure generally relates to fabrication of parts made of composite material. More specifically, this disclosure relates to apparatus and methods for consolidating and forming a pre-form made of fiber-reinforced plastic material (also referred to herein as a composite preform) to reduce voids and/or porosity.

Fiber-reinforced organic resin matrix composites have a high strength-to-weight ratio or a high stiffness-to-weight ratio and desirable fatigue characteristics that make them increasingly popular as a replacement for metal in aerospace applications. Organic resin composites may comprise thermoplastics or thermosetting plastics.

Prepregs combine continuous, woven, or chopped reinforcing fibers with an uncured, matrix resin, and usually comprise fiber sheets with a thin film of the matrix. Sheets of prepreg generally are placed (laid-up) by hand or with fiber placement machines directly upon a tool or die having a forming surface contoured to the desired shape of the completed part or are laid-up in a flat sheet which is then draped and formed over the tool or die to the contour of the tool. Then the resin in the prepreg layup is consolidated (i.e., pressed to remove any air, gas, or vapor) and cured (i.e., chemically converted to its final form usually through chain-extension) in a vacuum bag process in an autoclave (i.e., a pressure oven) to complete the part.

In hot press forming, the prepreg is laid-up, bagged (if necessary) and placed between matched metal tools that include forming surfaces that define the internal, external, or both mold lines of the completed part. The tools and composite preform are placed within a press and then the tools and preform are heated under pressure to produce a consolidated, net-shaped part.

It is known to consolidate and form composite preforms using inductively heated consolidation tools. Induction heating is a process in which an electrically conducting object (usually a metal) is heated by electromagnetic induction. During such heating, eddy currents are generated within the metal and the electrical resistance of the metal leads to Joule heating thereof. An induction heater typically comprises an electromagnet through which a high-frequency alternating current is passed. Most organic matrix composites require a susceptor in or adjacent to the composite material preform to achieve the necessary heating for consolidation or forming. The susceptor is heated inductively and transfers its heat principally through conduction to the preform sandwiched between opposing susceptor facesheets. During heating under pressure, the number of voids and/or the porosity of a composite preform can be reduced.

Recycled graphite fibers can be used in the fabrication of composite aircraft parts, such as lightweight seat back components. First, a matte product is fabricated using recycled graphite fibers and virgin thermoplastic fibers; then the matte product is consolidated and formed in matched tooling comprising opposing susceptor facesheets. These matte products produced with recycled graphite fibers can exhibit a rather matted and tangled fiber architecture. These products can also have undesirable unevenness and thickness/density variations. Furthermore, since the graphite fibers are tangled, they do not facilitate the flow of the thermoplastic material. These characteristics lead to the formation of voids and/or porosity in the final composite product due to the fact that thickness and density distribution are not uniform across the matte product. The formation of voids and/or porosity is further aided by the fact that the fibers are entangled and flow is limited and unable to "heal" porosity very effectively. Even prepreg has some variation in thickness and density distribution, which could lead to the formation of voids and/or porosity during matched tool molding of prepreg composites.

Accordingly, there is a need for a method and an apparatus that can reduce the number of voids and/or the porosity during the consolidation and formation of a composite preform having uneven thickness and/or density distribution. US5,380,480 describes a process for forming composite sheets into parts having uneven sections.

### SUMMARY

The subject matter disclosed herein is directed to a method for reducing the number of voids and/or porosity during the consolidation and formation of a composite preform having uneven thickness and/or density distribution, such as a matte product comprising recycled graphite fibers and virgin thermoplastic fibers. This method is carried out using an apparatus that comprises matched molding tools. The apparatus further comprises a compliant layer that is situated between the composite preform and one of the matched molding tools for the purpose of providing a more even pressure over the entire area of the preform during the consolidation process. The compliant layer should have an offset tensile
yield point (0.2% of the strain) in a range of 170-2070 kPa ( 25-300 psi) at the temperature of consolidation of the preform at strain rates of about 1 % to 10% strain per minute.

In accordance with one embodiment, a sheet of magnesium base alloy is used to act as the compliant layer or shim to compensate for uneven thickness or density over the area of a composite preform, for example, a matte product comprising recycled graphite fibers and virgin thermoplastic fibers. Magnesium base alloy makes an excellent candidate for a compliant layer for high-performance thermoplastic resins due to the fact that some magnesium alloys become very soft at temperatures useful for assisting the consolidation and molding of thermoplastic composites (i.e., 600-750°F/320-400°C) and do not melt until above 1000°F (540°C). As the temperature and pressure increase inside the apparatus during consolidation of the composite preform, the magnesium alloy sheet softens and forms into the areas of relatively lower pressure. The magnesium alloy sheet can be reused due to the soft nature of the material. Other alloys can be used instead of a magnesium base alloy provided that the alloy has an
offset tensile yield point (0.2% of the strain) in a range of 170-2070 kPa (25-300 psi) at the temperature of consolidation of tne preform at strain rates of about 1% to 10% strain per minute in accordance with one aspect, a method is disclosed for consolidating a preform made of composite material with reduced number of voids and/or porosity. The preform and a compliant metal alloy sheet are placed between less compliant matched confronting forming/molding surfaces with the preform being sandwiched between the metal alloy sheet and one of the matched confronting surfaces. The matched confronting surfaces are inductively heated (which heats the compliant metal alloy sheet by conduction) until the preform reaches at least a consolidation temperature of the composite material. During heating, force is applied so that the matched confronting surfaces exert sufficient compressive force on the preform and metal alloy sheet to cause the composite material to consolidate at the consolidation temperature. The compliant metal alloy
sheet has a tensile yield point in a range of 170-2070 kPa (25-300 psi) at the consolidation temperature at a strain rate of about 1 % to 10% strain per minute.

Another aspect of the disclosed subject matter is an apparatus for consolidating a preform made of composite material at a consolidation temperature, comprising: first and second tool assemblies having matched confronting surfaces; a metal alloy sheet disposed between said matched confronting surfaces, wherein said metal alloy sheet has a tensile yield
point in a range of 170-2070 kPa (25-300 psi) at the consolidation temperature at a strain rate of about 10% strain per minute; means for heating at least the matched confronting surfaces of the first and second tool assemblies; and means for applying force to one or both of the first and second tool assemblies so that the matched confronting surfaces are capable of exerting compressive force on the preform and metal alloy sheet.

A further aspect is a method for consolidating a composite preform made of recycled graphite fibers and organic resin fibers, comprising: placing the composite preform and a metal alloy sheet between matched confronting surfaces of first and second tool assemblies, the matched confronting surfaces being less compliant than the metal alloy sheet; heating the matched confronting surfaces of the first and second tool assemblies and the metal alloy sheet during a heating cycle; and applying force to one or both of the first and second tool assemblies so that the matched confronting surfaces exert sufficient compressive force on the composite preform and metal alloy sheet to cause thermal coupling of one matched surface to one side of the composite preform, the other side of the composite preform to the metal alloy sheet, and the metal alloy sheet to the other matched confronting surface. The force is applied during at least a portion of the heating cycle. The metal alloy sheet has a tensile yield point in a range of 170-2070 kPa (25-300 psi) at a consolidation temperature at a strain rate of about 1 % to 10% strain per minute.

Other aspects of the invention are disclosed and claimed below.

### BRIEF DESCRIPTION OF THE DRAWINGS

Various embodiments will be hereinafter described with reference to drawings for the purpose of illustrating the foregoing and other aspects of the invention.
FIG. 1 is a diagram showing a sectional view of portions of a known apparatus, the apparatus comprising upper and lower tool assemblies with matched surfaces designed to consolidate and form a composite preform. The tool assemblies are shown in their retracted positions and the preform is shown in an uncompressed state.
FIG. 2 is a diagram showing a sectional view of the apparatus depicted in FIG. 1, except that the tool assemblies are in their extended positions with the preform compressed therebetween.
FIG. 3 is a diagram showing an end view of a portion of a lower tooling die.
FIG. 4 is a diagram showing a sectional view of a portion of the lower tooling partially depicted in FIG. 3, the section being taken along line 4-4 seen in FIG. 3.
FIG. 5 is a diagram showing the placement of an unconsolidated matte product between a pair of opposing susceptors in their retracted positions, the matte product comprising recycled graphite fibers and virgin thermoplastic fibers.
FIG. 6 is a diagram showing a consolidated matte product between a pair of susceptors in their extended positions.
FIG. 7 is a diagram showing a compliant layer and a consolidated matte product between a pair of susceptors in their extended positions.
FIG. 8 is a graph showing the effect of temperature on the tensile properties of a magnesium base alloy having a chemical composition of 2.5-3.5% aluminum; 0.7-1.3% zinc; 0.20-1.0% manganese; balance magnesium. The 0.2% proof stress curve has been extrapolated to the right of the vertical axis labeled "ELONGATION" to show the anticipated effect of temperatures in excess of 300°C on the 0.2% proof stress.
FIG. 9 is a block diagram showing components of a system comprising upper and lower tool assemblies with matched surfaces and a compliant metal alloy sheet disposed therebetween for use in consolidating composite preforms.

Reference will hereinafter be made to the drawings in which similar elements in different drawings bear the same reference numerals.

### DETAILED DESCRIPTION

The following detailed disclosure describes a method and an apparatus for consolidating and molding/forming a composite preform having an uneven thickness and/or density distribution. In accordance with the disclosed method, a compliant layer is placed between the composite preform and one heated consolidation tool. The compliant layer is designed to distribute the molding pressure more evenly over the entire area of the uneven preform during the consolidation process.

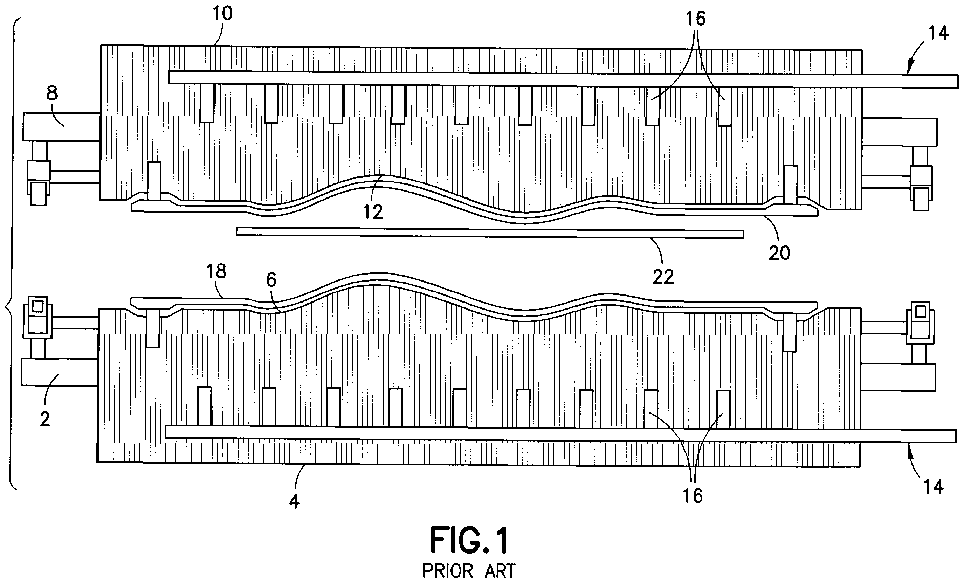

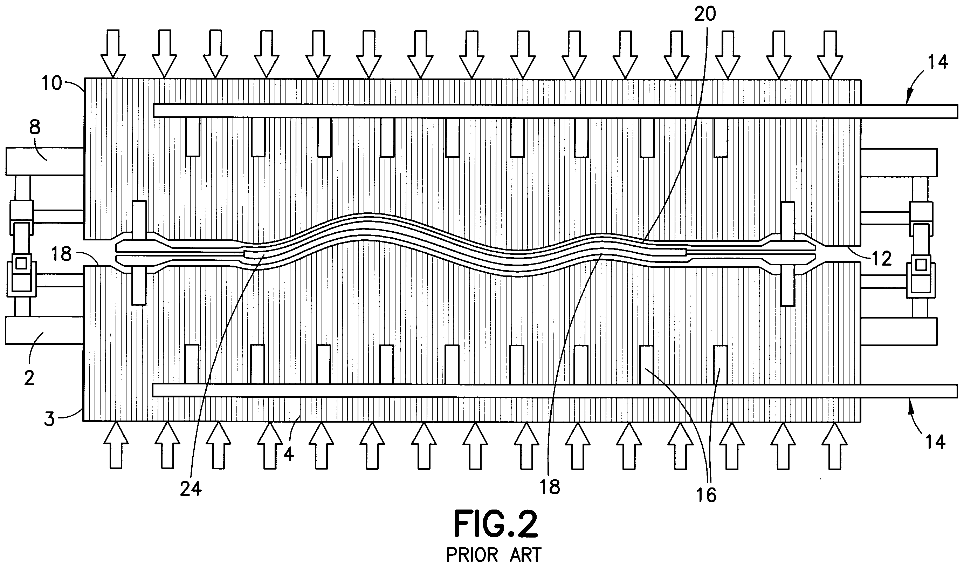

One known apparatus for matched tool consolidation of composite preforms is partly depicted in FIGS. 1 and 2. FIG. 1 shows the apparatus in a pre-consolidation stage, while FIG. 2 shows the apparatus while consolidation is under way. The apparatus comprises a lower die frame 2, a lower tooling die 4 supported by the lower die frame 2 and having a first contoured die surface 6, an upper die frame 8, and an upper tooling die 10 supported by the upper die frame 8 and having a second contoured die surface 12 which is complementary to the first contoured die surface 6. The contoured die surfaces 6 and 12 may define a complex shape different than what is depicted in FIGS. 1 and 2. However, the novel means disclosed herein also have application when the die surfaces are planar. The die frames 2 and 8 may be coupled to hydraulic actuators (not shown in FIGS. 1 and 2), which move the dies toward and away from each other. In addition, one or more induction coils (not shown in FIGS. 1 and 2) may extend through each of the tooling dies 4 and 10 to form an induction heater for raising the temperature of the resin in a composite preform to at least its consolidation temperature. A thermal control system (not shown) may be connected to the induction coils.

Still referring to FIGS. 1 and 2, the apparatus further comprises a lower susceptor 18 and an upper susceptor 20 made of electrically and thermally conductive material. The susceptors and the induction coils are positioned so that the susceptors can be heated by electromagnetic induction. The lower susceptor 18 may generally conform to the first contoured die surface 6 and the upper susceptor 20 may generally conform to the second contoured die surface 12. In some cases, it is preferred that the temperature at which a composite preform is consolidated should not exceed a certain temperature. To this end, susceptors 18 and 20 are preferably so-called "smart susceptors". A smart susceptor is constructed of a material, or materials, that generate heat efficiently until reaching a threshold (i.e., Curie) temperature. As portions of the smart susceptor reach the Curie temperature, the magnetic permeability of those portions falls to unity (i.e., the susceptor becomes paramagnetic) at the Curie temperature. This drop in magnetic permeability has two effects: it limits the generation of heat by those portions at the Curie temperature, and it shifts the magnetic flux to the lower temperature portions, causing those portions below the Curie temperature to more quickly heat up to the Curie temperature. Accordingly, thermal uniformity of the heated preform during the forming process can be achieved irrespective of the input power fed to the induction coils by judiciously selecting the material for the susceptor. In accordance with one embodiment, each susceptor is a layer or sheet of magnetically permeable material. Preferred magnetically permeable materials for constructing the susceptors include ferromagnetic materials that have an approximately 10-fold decrease in magnetic permeability when heated to a temperature higher than the Curie temperature. Such a large drop in permeability at the critical temperature promotes temperature control of the susceptor and, as a result, temperature control of the part being manufactured. Ferromagnetic materials include iron, cobalt, nickel, gadolinium and dysprosium, and alloys thereof.

The consolidation/molding apparatus shown in FIGS. 1 and 2 further comprises a cooling system 14 comprising respective sets of cooling conduits 16 distributed in the tooling dies 4 and 10. Each set of coolant conduits 16 is coupled via respective manifolds to a source of cooling medium, which may liquid, gas or a gas/liquid mixture such as mist or aerosol.

In a typical implementation of a composite consolidation and molding process, the composite preform 22 is initially positioned between the upper and lower tooling dies of the stacked tooling apparatus, as shown in FIG. 1. Then the tooling dies 4 and 10 are moved toward each other, as shown in FIG. 2, as the induction coils heat the susceptors 18 and 20. Therefore, as the tooling dies close toward each other, the susceptors rapidly heat the composite preform 22. During this process, the composite preform will be molded by the opposing contoured (or planar) surfaces of the susceptors 18 and 20.

After a predetermined interval of time, the cooling system 14 will be operated to apply a cooling medium to the tooling dies 4 and 10, thereby also cooling the susceptors 18 and 20 and the composite preform 22 therebetween. The composite preform 22 remains sandwiched between the susceptors for a predetermined period of time until complete cooling of the composite preform has occurred. This allows the molded and consolidated composite preform 22 to retain the structural shape which is defined by the contoured surfaces of the susceptors 18 and 20. The tooling dies are then opened and the composite preform can be removed. The formed and cooled composite preform is removed from the stacked tooling apparatus without loss of dimensional accuracy when it is cooled at an appropriate property-enhancing rate.

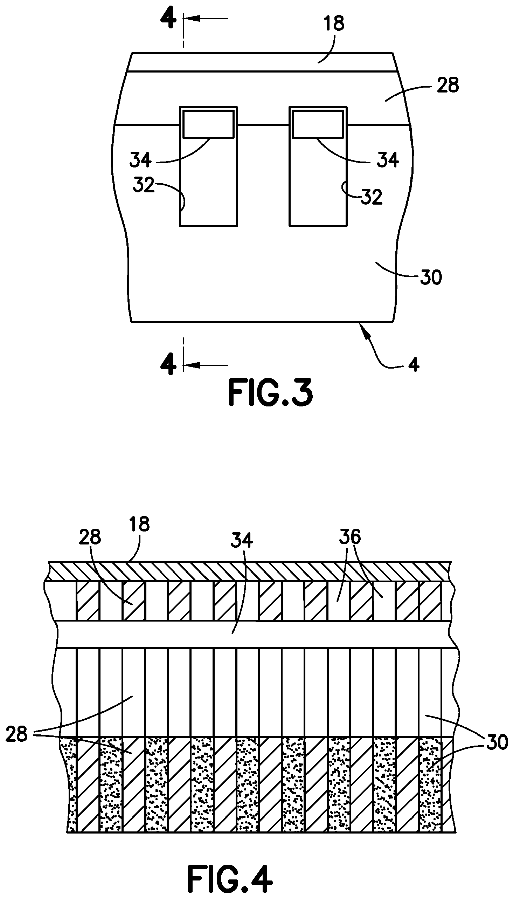

FIG. 3 is an end view of a portion of a lower tooling die 4. The upper tooling die may have a similar construction. Each tooling die comprises a multiplicity of cavities 32, which may be mutually parallel. FIG. 3 shows only two such cavities 32, the upper portion of each cavity 32 having a portion of a respective turn of an induction coil 34 which passes through the uppermost portion of the cavity.

The sectional view shown in FIG. 4 is taken along line 4---4 seen in FIG. 3 and passes through a cavity 32, but not through the portion of inductive coil 34 therein. One or more coils can be used. As the parts requiring fabrication get bigger, it may be necessary to break the coil into multiple coils connected in parallel in order to limit the voltage required by each coil. Without the smart susceptors, control of the current (and resulting temperature) to each parallel coil could become problematic. For the sake of simplicity, FIGS. 3 and 4 show a portion of a lower tooling die for which the corresponding portion of the attached susceptor is horizontal rather than angled.

Still referring to FIGS. 3 and 4, the lower tooling die may comprise a lamination of alternating metal (e.g., stainless steel) plates 28 and dielectric spacers 30 which are trimmed to appropriate dimensions to form a plurality of parallel longitudinal cavities 32 in which the turns of one or more induction coils 34 reside. Each metal plate 28 may have a thickness in the range of about 0.0625 to about 0.5 inch. Air gaps 36 (see FIG. 4) may be provided between the upper portions of metal plates 28 to facilitate cooling of the susceptors. The stacked metal plates 28 may be attached to each other using clamps (not shown), fasteners (not shown) and/or other suitable means known to persons skilled in the art. The stacked metal plates 28 may be selected based on their electrical and thermal properties and may be transparent to the electromagnetic field produced by the induction coils.

As best seen in FIG. 4, the smart susceptor 18 is attached directly to the metal plates 28 of the lower tooling die. (The smart susceptor 20 seen in FIG. 1 is likewise attached directly to the metal plates of the upper tooling die.) In accordance with one embodiment, the metal plates 28 are made of austenitic (nonmagnetic) stainless steel and each plate is 0.185 inch (0.47cm) thick, which is suitable when the induction heater is operated at a frequency of 1 to 3 kHz and with smart susceptors having thicknesses of 0.125 inch (0.318cm). These lamination plates can be thicker than 0.185 inch (0.47cm) for lower induction heater frequencies and would need to be thinner when using higher frequencies. These laminations can (and should) have a space 36 between them to allow the quenching fluid (gas or liquid) to have direct impingement against the surface of the heated susceptor 18. This spacing is dictated by the thickness and strength of the smart susceptor surface shell and the consolidation pressures used. In addition, the susceptors do not require an electrical connection to one another. The metal plates 28 are interleaved with dielectric spacers 30 except near the susceptor and in places that are needed to allow the quenching medium to flow to the susceptor. The same considerations apply to the upper tooling die and the susceptor attached thereto.

Preferably each induction coil 34 is fabricated from copper tubing which is lightly drawn. A lightly drawn condition of the tubing enables precision bending by numerically controlled bending machines. Numerically controlled bending of the tubes allows accurate placement of the tubing relative to the changing contours of the susceptors, thereby improving the degree to which the each susceptor is uniformly inductively coupled to the induction heater across the length and width of the susceptor. However, it should be understood that the compliant layer disclosed hereinafter can be employed also in cases wherein the susceptors are planar rather than concave/convex. Optionally the coils 34 also remove thermal energy by serving as a conduit for a coolant fluid, such as water. After being bent and installed, the coils include straight tubing sections connected by flexible tubing sections. The flexible tubing sections connect the straight tubing sections and also allow the dies to be separated. The accurate placement of the tubing of the induction coils 34 promotes uniformity in the amount of heat generated by the magnetic flux field and the amount of heat removed by flow of the coolant fluid.

As disclosed in U.S. Patent No. 6,528,771, the induction coils 34 can be connected to a temperature control system that includes a power supply, a controlling element, a sensor and a fluid coolant supply preferably containing water (not shown). The power supply supplies an alternating current to the induction coils 34 which causes the coils to generate the electromagnetic flux field. The fluid coolant supply supplies water to the induction coils 34 for circulation through the coils and the removal of thermal energy from the dies. The sensor is capable of measuring the power supplied by the power supply. Alternatively, or in addition to measuring the power supply, the sensor may include a voltmeter that can measure the voltage drop across the induction coils 34. The controlling element receives the sensor output and uses the measurements in a feedback loop to adjust the power being supplied by the power supply. The controlling element can include hardware, software, firmware, or a combination thereof that is capable of using feedback to adjust the voltage output by the power supply.

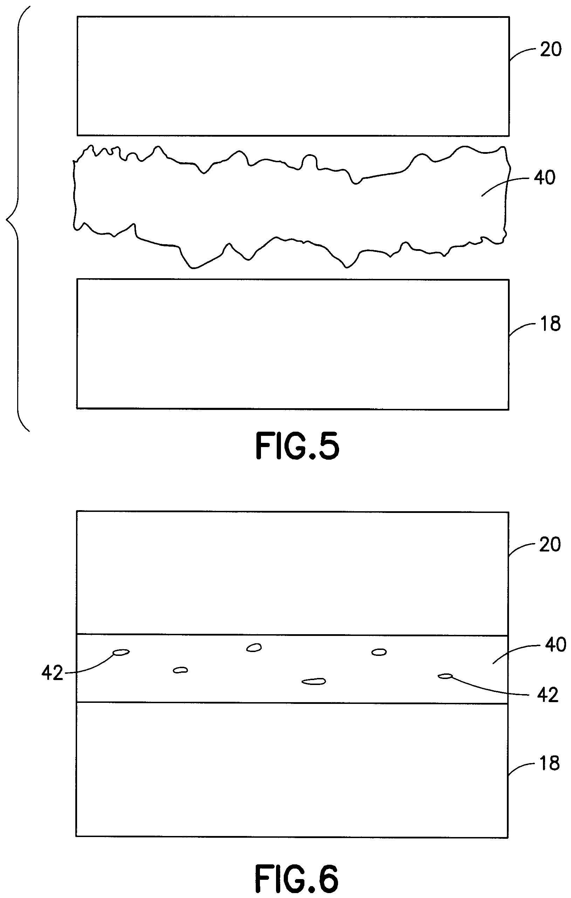

The system described with reference to FIGS. 1-4 can be enhanced to facilitate the processing of composite preforms having uneven thickness and/or density across the extent of the preform by adding a compliant layer between the composite preform and one susceptor. For example, it is known to fabricate aircraft parts from a matte product that comprises recycled graphite fibers and virgin thermoplastic fibers. FIG. 5 shows the placement of such a matte product 40 (in an unconsolidated state) between a pair of opposing susceptors 18 and 20 in their retracted positions. The matte product 40 can have a matted and tangled fiber architecture and undesirable unevenness and thickness/density variations. Furthermore, since the graphite fibers are tangled, they do not facilitate the flow of the thermoplastic material. As seen in FIG. 6, which shows the matte product 40 at the end of the consolidation process, these characteristics can lead to the formation of voids 42 and/or porosity in the final composite product due to the fact that thickness and density distribution were not uniform across the matte product. The formation of voids and/or porosity is further aided by the fact that the fibers are entangled and flow is limited and unable to "heal" porosity very effectively.

In accordance with various embodiments, the consolidation apparatus further comprises a compliant layer that is situated between the composite preform and one of the matched molding tools for the purpose of providing a more even pressure over the entire area of the preform during the consolidation process. The compliant layer should have an offset tensile
yield point (0.2% of the strain) in a range of 170-2070 kPa ( 25-300 psi) at the temperature of consolidation of the preform at strain rates of about 1 % to 10% strain per minute.

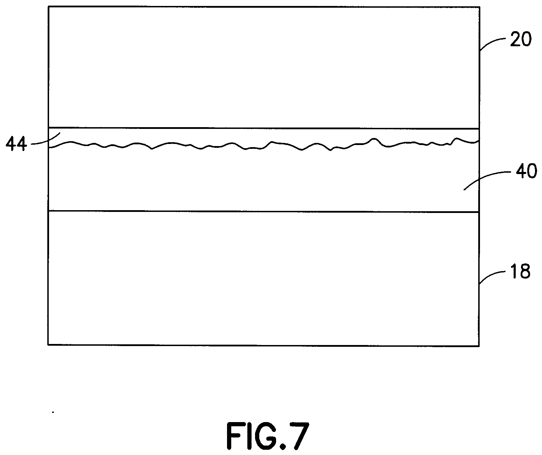

In accordance with one embodiment shown in FIG. 7, a sheet 44 of magnesium base alloy approximately 0.125 (0.318cm) inch thick is used to act as the compliant layer or shim to compensate for uneven thickness or density over the area of a matte product 40 comprising recycled graphite fibers and virgin thermoplastic fibers. The matte product 40 and the magnesium alloy sheet 44 are shown sandwiched between a pair of susceptors 18 and 20 in their extended position, i.e., the molding apparatus is closed. A magnesium base alloy is selected which becomes very soft at temperatures useful for assisting the consolidation and molding of thermoplastic composites (i.e., 600-750°F/320-400°C) and does not melt until above 1000°F (540°C). As the temperature and pressure increase inside the molding apparatus during consolidation of the resulting composite product, the magnesium alloy sheet 44 softens and forms into the areas of relatively lower pressure. The magnesium alloy sheet 44 can be reused due to the soft nature of the material.

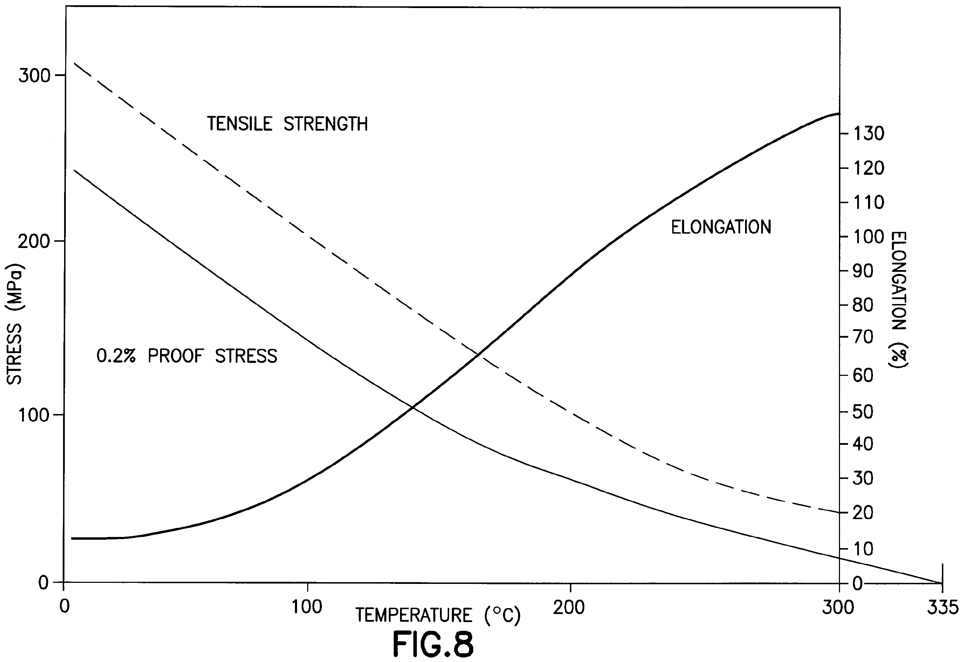

More specifically, a suitable magnesium alloy sheet material is Elektron AZ31 B Sheet, which is commercially available from Magnesium Elektron UK in Manchester, England. AZ31B is a wrought magnesium base alloy, is non magnetic, has high electrical and thermal conductivity, and has a melting range of 1050-1170°F (566-632°C). Superplastic forming of AZ31B can occur during the preform consolidation process. The chemical composition of AZ31B magnesium base alloy is: 2.5-3.5% aluminum; 0.7-1.3% zinc; 0.20-1.0% manganese; balance magnesium. FIG. 8 is a graph showing the effect of temperature on the tensile properties of this particular magnesium base alloy. The 0.2% proof stress curve has been extrapolated to the right of the vertical axis labeled "ELONGATION" to show the anticipated effect of temperatures in excess of 300°C on the 0.2% proof stress.

Other magnesium base alloys can be used instead of AZ31 B provided that the alloy has an offset tensile yield point (0.2% of the strain) in a range of 170-207 0 kPa (25-300 psi) at the temperature of consolidation of the preform at strain rates of about 1 % to 10% strain per minute. Alternatively, metal alloys having a base element different than magnesium, such as aluminum, can be used provided that they have the aforementioned tensile yield property.

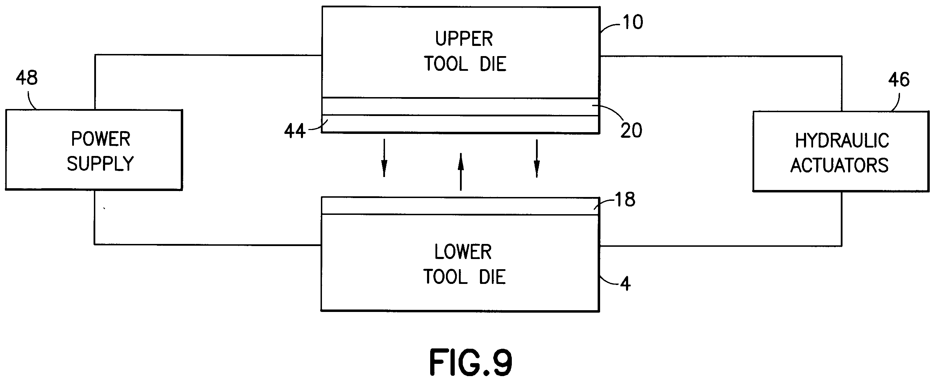

A system incorporating a compliant layer 44 the type described above is shown in FIG. 9. In this embodiment, the compliant layer 44 is attached to the upper tool die 10 by means of clamps, fasteners or other known means (not shown in FIG. 9), with an upper susceptor 20 disposed between the compliant layer 44 and the upper tool die 10. Alternatively, the compliant layer could be attached to the lower tool die 4 with the lower susceptor 18 disposed therebetween. During the consolidation process, the upper and lower tool dies are moved toward each other by hydraulic actuators 46, which tool closing motion is indicated by arrows in FIG. 9. Electrical power is supplied to the induction coils (not shown) by a power supply 48 in the manner previously described. After consolidation and cooling, the hydraulic actuators 46 move the tool dies apart to allow removal of the consolidated product from the mold. The compliant layer can be reused.

A compliant layer of the type described above also has application in the consolidation and forming/molding of composite preforms other than the matte product described herein. For example, the compliant layer can be used in the consolidation of composite preforms that comprise reinforcing fibers embedded in a matrix made of either thermoplastic or thermosetting plastic material.

While the invention has been described with reference to various embodiments, it will be understood by those skilled in the art that various changes may be made and equivalents may be substituted for elements thereof without departing from the scope of the invention. For example, a compliant layer can be used with heated consolidation tools that lack susceptors. In cases wherein the tooling dies have heated matched surfaces, the compliant layer can be placed between one of those heated matched surfaces and the composite preform. In addition, many modifications may be made to adapt a particular situation to the teachings herein without departing from the essential scope thereof. Therefore it is intended that the claims not be limited to the particular embodiments disclosed.

The method claims set forth hereinafter should not be construed to require that the steps recited therein be performed in alphabetical order or in the order in which they are recited, and should not be construed to exclude two or more steps being performed concurrently.

## Claims

1. A method for consolidating a preform (22) made of composite material, comprising:
placing the preform (22) and a metal alloy sheet (44) between first (4) and second (10) tool assemblies having matched confronting surfaces (6, 12) which are less compliant than the metal alloy sheet (44), with the preform (22) being sandwiched between the metal alloy sheet (44) and one of the matched confronting surfaces (6, 12);
heating the matched confronting surfaces (6, 12) of the first (4) and second (10) tool assemblies and the metal alloy sheet (44) until the preform (22) reaches at least a consolidation temperature of the composite material; and
applying force to one or both of the first (4) and second (10) tool assemblies so that the matched confronting surfaces (6, 12) exert sufficient compressive force on the preform (22) and metal alloy sheet (44) to cause the composite material to consolidate at the consolidation temperature,
wherein the metal alloy sheet (44) has a tensile yield point in a range of 170-2070 kPa at the consolidation temperature at a strain rate of about 1% to 10% strain per minute.

2. The method as recited in claim 1, wherein the metal alloy sheet (44) is made of magnesium base alloy.

3. The method as recited in claim 2, wherein a chemical composition of the magnesium base alloy includes magnesium, aluminum, zinc and manganese.

4. The method as recited in claim 1, wherein the metal alloy sheet (44) is made of aluminum base alloy.

5. The method as recited in any of claims 1-4, wherein the metal alloy sheet (44) is very soft at the consolidation temperature.

6. The method as recited in any of claims 1-5, wherein the composite material comprises a matte product.

7. The method as recited in claim 6, wherein the matte product comprises recycled graphite fibers.

8. The method as recited in claim 7, wherein the matte product further comprises thermoplastic fibers.

9. The method as recited in claim 6, wherein the composite material comprises graphite fibers and plastic material.

10. An apparatus for consolidating a preform (22) made of composite material at a consolidation temperature, comprising:
first (4) and second (10) tool assemblies having matched confronting surfaces (6, 12);
a metal alloy sheet (44) disposed between said matched confronting surfaces (6, 12), wherein said metal alloy sheet (44) has a tensile yield point in a range of 170-2070 kPa at the consolidation temperature at a strain rate of about 1 % to 10% strain per minute;
means for heating at least said matched confronting surfaces (6, 12) of the first (4) and second (10) tool assemblies; and
means for applying force to one or both of the first (4) and second (10) tool assemblies so that said matched confronting surfaces (6, 12) are capable of exerting compressive force on the preform (22) and metal alloy sheet (44).

11. The apparatus as recited in claim 10, wherein said metal alloy sheet (44) is made of magnesium base alloy.

12. The apparatus as recited in claim 11, wherein a chemical composition of the magnesium base alloy includes magnesium, aluminum, zinc and manganese.

13. The apparatus as recited in claim 10, wherein said metal alloy sheet (44) is made of aluminum base alloy.

14. The apparatus as recited in any of claims 10-13, wherein the metal alloy sheet (44) is very soft at the consolidation temperature.

15. The apparatus as recited in any of claims 10-14, wherein each of said first (4) and second (10) tool assemblies comprises a respective susceptor, said susceptors (18 and 20) forming said matched confronting surfaces (6, 12).

## Patentansprüche

1. Verfahren zum Verfestigen eines Vorformlings (22), der aus Verbundmaterial hergestellt ist, beinhaltend:
Anordnen des Vorformlings (22) und eines Metalllegierungsblechs (44) zwischen einer ersten (4) und einer zweiten (10) Werkzeuganordnung mit passenden gegenüberliegenden Flächen (6, 12), die weniger nachgiebig als das Metalllegierungsblech (44) sind, wobei der Vorformling (22) zwischen dem Metalllegierungsblech (44) und einer der passenden gegenüberliegenden Flächen (6, 12) angeordnet ist;
Erhitzen der passenden gegenüberliegenden Flächen (6, 12) der ersten (4) und der zweiten (10) Werkzeuganordnung und des Metalllegierungsblechs (44), bis der Vorformling (22) zumindest eine Verfestigungstemperatur des Verbundmaterials erreicht; und
Ausüben von Kraft auf eine oder beide der ersten (4) und der zweiten (10) Werkzeuganordnung, so dass die passenden gegenüberliegenden Flächen (6, 12) eine ausreichende Kompressionskraft auf den Vorformling (22) und das Metalllegierungsblech (44) ausüben, um zu bewirken, dass sich das Verbundmaterial bei der Verfestigungstemperatur verfestigt,
wobei das Metalllegierungsblech (44) bei der Verfestigungstemperatur bei einer Verformungsgeschwindigkeit von 1 % bis 10 % Verformung pro Minute eine Zugstreckgrenze in einem Bereich von 170 bis 2070 kPa aufweist.

2. Verfahren nach Anspruch 1, wobei das Metalllegierungsblech (44) aus einer Legierung auf Magnesiumbasis hergestellt ist.

3. Verfahren nach Anspruch 2, wobei eine chemische Zusammensetzung der Legierung auf Magnesiumbasis Magnesium, Aluminium, Zink und Mangan enthält.

4. Verfahren nach Anspruch 1, wobei das Metalllegierungsblech (44) aus einer Legierung auf Aluminiumbasis hergestellt ist.

5. Verfahren nach einem der Ansprüche 1 bis 4, wobei das Metalllegierungsblech (44) bei der Verfestigungstemperatur sehr weich ist.

6. Verfahren nach einem der Ansprüche 1 bis 5, wobei das Verbundmaterial ein mattes Produkt enthält.

7. Verfahren nach Anspruch 6, wobei das matte Produkt recycelte Graphitfasern enthält.

8. Verfahren nach Anspruch 7, wobei das matte Produkt ferner thermoplastische Fasern enthält.

9. Verfahren nach Anspruch 6, wobei das Verbundmaterial Graphitfasern und Kunststoff enthält.

10. Vorrichtung zum Verfestigen eines Vorformlings (22), der aus Verbundmaterial hergestellt ist, bei einer Verfestigungstemperatur, aufweisend:
eine erste (4) und eine zweite (10) Werkzeuganordnung mit passenden gegenüberliegenden Flächen (6, 12);
ein Metalllegierungsblech (44), das zwischen den passenden gegenüberliegenden Flächen (6, 12) angeordnet ist,
wobei das Metalllegierungsblech (44) bei der Verfestigungstemperatur bei einer Verformungsgeschwindigkeit von 1 % bis 10 % Verformung pro Minute eine Zugstreckgrenze in einem Bereich von 170 bis 2070 kPa aufweist;
Mittel zum Erhitzen zumindest der passenden gegenüberliegenden Flächen (6, 12) der ersten (4) und der zweiten (10) Werkzeuganordnung; und
Mittel zum Ausüben von Kraft auf eine oder beide der ersten (4) und der zweiten (10) Werkzeuganordnung, so dass die passenden gegenüberliegenden Flächen (6, 12) in der Lage sind, eine Kompressionskraft auf den Vorformling (22) und das Metalllegierungsblech (44) auszuüben.

11. Vorrichtung nach Anspruch 10, wobei das Metalllegierungsblech (44) aus einer Legierung auf Magnesiumbasis hergestellt ist.

12. Vorrichtung nach Anspruch 11, wobei eine chemische Zusammensetzung der Legierung auf Magnesiumbasis Magnesium, Aluminium, Zink und Mangan enthält.

13. Vorrichtung nach Anspruch 10, wobei das Metalllegierungsblech (44) aus einer Legierung auf Aluminiumbasis hergestellt ist.

14. Vorrichtung nach einem der Ansprüche 10 bis 13, wobei das Metalllegierungsblech (44) bei der Verfestigungstemperatur sehr weich ist.

15. Vorrichtung nach einem der Ansprüche 10 bis 14, wobei jede der ersten (4) und der zweiten (10) Werkzeuganordnung einen entsprechenden Suszeptor aufweist, wobei die Suszeptoren (18 und 20) die passenden gegenüberliegenden Flächen (6, 12) bilden.

## Revendications

1. Procédé pour consolider une préforme (22) constituée d'un matériau composite, comprenant de :
placer la préforme (22) et une feuille d'alliage métallique (44) entre un premier (4) et un deuxième (10) assemblage d'outils ayant des surfaces complémentaires face à face (6, 12) qui sont moins conformes que la feuille d'alliage métallique (44), avec la préforme (22) en sandwich entre la feuille d'alliage métallique (44) et une des surfaces complémentaires face à face (6, 12) ;
chauffer les surfaces complémentaires face à face (6, 12) des premier (4) et deuxième (10) assemblages d'outils et la feuille d'alliage métallique (44) jusqu'à ce que la préforme (22) atteigne au moins une température de consolidation du matériau composite ; et
appliquer une force sur une ou les deux parmi le premier (4) et le deuxième (10) assemblage d'outils de façon que les surfaces complémentaires face à face (6, 12) exercent assez de force de compression sur la préforme (22) et la feuille d'alliage métallique (44) pour amener le matériau composite à se consolider à la température de consolidation,
où la feuille d'alliage métallique (44) a une limite élastique en traction dans la gamme de 170 à 2070 kPa à la température de consolidation à un taux de déformation d'environ 1 % à 10 % de déformation par minute.

2. Procédé selon la revendication 1, dans lequel la feuille d'alliage métallique (44) est constitué d'un alliage à base de magnésium.

3. Procédé selon la revendication 2, dans lequel une composition chimique de l'alliage à base de magnésium contient du magnésium, de l'aluminium, du zinc et du manganèse.

4. Procédé selon la revendication 1, dans lequel la feuille d'alliage métallique (44) est constitué d'un alliage à base d'aluminium.

5. Procédé selon l'une quelconque des revendications 1 à 4, dans lequel la feuille d'alliage métallique (44) est très mou à la température de consolidation.

6. Procédé selon l'une quelconque des revendications 1 à 5, dans lequel le matériau composite contient une matte.

7. Procédé selon la revendication 6, dans lequel la matte contient des fibres de graphite recyclé.

8. Procédé selon la revendication 7, dans lequel la matte contient en outre des fibres thermoplastiques.

9. Procédé selon la revendication 6, dans lequel le matériau composite contient des fibres de graphite et un matériau plastique.

10. Appareil de consolidation d'une préforme (22) constituée d'un matériau composite à une température de consolidation, comprenant :
un premier (4) et un deuxième (10) assemblage d'outils ayant des surfaces complémentaires face à face (6, 12) ;
une feuille d'alliage métallique (44) disposée entre lesdites surfaces complémentaires face à face (6, 12), ladite feuille d'alliage métallique (44) ayant une limite élastique en traction dans la gamme de 170 à 2070 kPa à la température de consolidation à un taux de déformation d'environ 1 % à 10 % de déformation par minute ;
des moyens de chauffer au moins lesdites surfaces complémentaires face à face (6, 12) des premiers (4) et deuxièmes (10) assemblages d'outils ; et
des moyens d'appliquer une force sur une ou les deux parmi le premier (4) et le deuxième (10) assemblage d'outils de façon que les surfaces complémentaires face à face (6, 12) puissent exercer assez de force de compression sur la préforme (22) et la feuille d'alliage métallique (44).

11. Appareil selon la revendication 10, dans lequel ladite feuille d'alliage métallique (44) est constituée d'un alliage à base de magnésium.

12. Appareil selon la revendication 11, dans lequel une composition chimique de l'alliage à base de magnésium contient du magnésium, de l'aluminium, du zinc et du manganèse.

13. Appareil selon la revendication 10, dans lequel ladite feuille d'alliage métallique (44) est constitué d'un alliage à base d'aluminium.

14. Appareil selon l'une quelconque des revendications 10 à 13, dans lequel la feuille d'alliage métallique (44) est très mou à la température de consolidation.

15. Appareil selon l'une quelconque des revendications 10 à 14, dans lequel chacun des premiers (4) et deuxièmes (10) assemblages d'outils comprend un suscepteur respectif, lesdits suscepteurs (18 et 20) formant lesdites surfaces complémentaires face à face (6, 12).
